(19) Europäisches Patentamt

European Patent Office

Office européen des brevets

(11) **EP 0 899 239 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.[7]: **C02F 1/44**, B01D 61/02

(21) Anmeldenummer: **98116068.2**

(22) Anmeldetag: **26.08.1998**

(54) **Verfahren zum Aufbereiten von Wasser durch Umkehrosmose oder Nanofiltration**

Method for treating water by reverse osmosis or nanofiltration

Procédé pour le traitement de l'eau par osmose inverse ou nanofiltration

(84) Benannte Vertragsstaaten:
**AT CH DE ES FR GB IT LI**

(30) Priorität: **28.08.1997 DE 19737522**
**14.10.1997 DE 19745297**

(43) Veröffentlichungstag der Anmeldung:
**03.03.1999 Patentblatt 1999/09**

(73) Patentinhaber: **Ondeo Industrial Solutions GmbH**
**70565 Stuttgart (DE)**

(72) Erfinder:
• **Gebicke, Wolfgang, Dr.-Ing.**
**71254 Ditzingen (DE)**
• **Nagel, Rolf Dipl.-Ing**
**73663 Berglen (DE)**

(74) Vertreter: **Dreiss, Fuhlendorf, Steimle & Becker**
**Patentanwälte,**
**Postfach 10 37 62**
**70032 Stuttgart (DE)**

(56) Entgegenhaltungen:
WO-A-97/05945          US-A- 5 156 739
US-A- 5 670 053

• PATENT ABSTRACTS OF JAPAN vol. 017, no. 670 (C-1139), 9. Dezember 1993 -& JP 05 220480 A (MIURA CO LTD), 31. August 1993 -& DATABASE WPI Section Ch, Week 9339 Derwent Publications Ltd., London, GB; Class D15, AN 93-308518 XP002083439

• PATENT ABSTRACTS OF JAPAN vol. 012, no. 159 (C-495), 14. Mai 1988 -& JP 62 273095 A (JAPAN ORGANO CO LTD), 27. November 1987 -& DATABASE WPI Section Ch, Week 8816 Derwent Publications Ltd., London, GB; Class D15, AN 88-107462 XP002083440

• PATENT ABSTRACTS OF JAPAN vol. 095, no. 004, 31. Mai 1995 & JP 07 000962 A (HITACHI PLANT ENG & CONSTR CO LTD), 6. Januar 1995 -& DATABASE WPI Section Ch, Week 9511 Derwent Publications Ltd., London, GB; Class D15, AN 95-077370 XP002083441

• PATENT ABSTRACTS OF JAPAN vol. 014, no. 220 (C-0717), 10. Mai 1990 & JP 02 052088 A (JAPAN ORGANO CO LTD), 21. Februar 1990 -& DATABASE WPI Section Ch, Week 9014 Derwent Publications Ltd., London, GB; Class D15, AN 90-102532 XP002083442 A

• PATENT ABSTRACTS OF JAPAN vol. 016, no. 180 (C-0935), 30. April 1992 & JP 04 022490 A (HITACHI PLANT ENG & CONSTR CO LTD), 27. Januar 1992 -& DATABASE WPI Section Ch, Week 9210 Derwent Publications Ltd., London, GB; Class A88, AN 92-077011 XP002083443

• PATENT ABSTRACTS OF JAPAN vol. 012, no. 306 (C-522), 19. August 1988 -& JP 63 077588 A (HITACHI LTD), 7. April 1988 -& DATABASE WPI Section Ch, Week 8820 Derwent Publications Ltd., London, GB; Class D15, AN 88-136248 XP002083444

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 899 239 B1

**Beschreibung**

Die Erfindung betrifft ein Verfahren mit den Merkmalen des Oberbegriffs des Anspruches 1 zum Aufbereiten von Wasser, insbesondere zum Herstellen von Reinwasser z.B. für pharmazeutische Verwendungen, durch Umkehrosmose oder Nanofiltration.

Im Zuge der Aufbereitung von Wasser durch den an sich bekannten Prozess der Umkehrosmose oder Nanofiltration werden dem Wasser Ionen entzogen. Das Wasser wird unter Druck entlang einer für Wasser permeablen Membran geführt, wobei Wasser als Permeat durch die Membran hindurchtritt und die meisten Ionen auf der Konzentratseite von der Membran zurückgehalten werden. Hierdurch wird auch die Leitfähigkeit des aufbereiteten Wassers auf der Permeatseite reduziert.

Beispielsweise liegt die Leitfähigkeit des zur Herstellung von Reinstwasser verwendeten Rohwassers normalerweise im Bereich von 250 µS/cm bis über 1.000 µS/cm. Im Zuge der Aufbereitung soll die Leitfähigkeit auf weniger als 5 µS/cm, vorzugsweise auf weniger als 2 µS/cm gesenkt werden.

Die Leitfähigkeit des Wassers wird durch die im Wasser in ihre Ionen dissoziierten Salze sowie durch organische und anorganische Säuren und Laugen verursacht. Die meisten dieser Stoffe werden durch die in der Wasseraufbereitung üblichen Verfahren durch Ionenaustausch oder das hier in Rede stehende Verfahren der Umkehrosmose oder Nanofiltration mit hoher Effektivität abgetrennt.

Besondere Bedeutung kommt dem Gleichgewicht der Kohlensäure zu.

$$H_2O + CO_2 <\text{---}> H_2CO_3$$

$$H_2CO_3 <\text{---}> H^+ + HCO_3^-$$

$$HCO_3^- <\text{---}> H^+CO_3^{2-}$$

Dieses Gleichgewicht ist abhängig vom pH-Wert des Wassers. Kohlensäure liegt als sogenannte schwache Säure bei einem pH-Wert unterhalb von 4,3 in nicht dissoziierter Form vor und zerfällt aufgrund ihrer Unbeständigkeit in $H_2O$ und gelöstes $CO_2$. Im Bereich zwischen pH 4,3 und pH 8,2 dissoziiert die Kohlensäure in ihre erste Dissoziationsstufe in $H^+ + HCO_3^-$. Je nach Vorgabe des Säuregehalts liegen in diesem Bereich die Bestandteile der Kohlensäure in Form gelösten Kohlendioxids und des Hydrogenkarbonations vor, wobei der Anteil des Kohlendioxids mit zunehmendem pH-Wert abnimmt.

Erst bei Bereitstellung stark alkalischer Umgebung mit einem pH-Wert von mehr als 8,2 beginnt die Kohlensäure bzw. das Hydrogenkarbonation in die zweite Dissoziationsstufe zu $H^+$ und $CO_3^{2-}$ zu dissoziieren. Dieser Bereich ist jedoch für das gattungsgemäße Verfahren nicht von Bedeutung.

Im Rohwasser kann die Konzentration der Hydrogenkarbonationen je nach Quelle mehrere 100 g/l betragen. Die Hydrogenkarbonationen lassen sich ebenfalls effektiv in an sich bekannter Weise durch Ionenaustausch oder wie hier Umkehrosmose abtrennen.

Die Konzentration des gelösten Kohlendioxids im Rohwasser kann je nach Quelle bei wenigen Milligramm pro Liter bis über 20 mg/l liegen. Bei einer Konzentration von nur 3 mg/l $CO_2$ ergibt sich eine Leitfähigkeit von 2,1 µS/cm, bei 20 mg/l $CO_2$ liegt die Leitfähigkeit bereits bei 5,5 µS/cm. Die im Gleichgewicht mit der Luft liegende Kohlendioxidkonzentration im Wasser beträgt bei 20° 0,5 mg/l und entspricht einer Leitfähigkeit von ca. 0,8 µS/cm. Wenn die Leitfähigkeit des Wassers im Zuge der Aufbereitung unterhalb von 2 oder gar auf unterhalb von 1,5 µS/cm reduziert werden soll, so ist der auf das stets vorhandene Kohlendioxid zurückzuführende Anteil verhältnismäßig groß und begrenzt daher die Wirksamkeit des Osmose- oder Nanofiltrationsverfahrens, da gelöstes Kohlendioxid nicht zurückgehalten werden kann.

Eine sogenannte Vollentsalzung des Wasser durch Ionenaustausch bis zu einer Leitfähigkeit von 1,3 µS/cm ist technisch möglich; hierzu werden jedoch Chemikalien benötigt, und das Verfahren kann nur diskontinuierlich durchgeführt werden. Für viele Anwendungsfälle ist die Entsalzung von Wasser allein durch Ionenaustausch nicht wirtschaftlich.

Bei einem einstufigen Umkehrosmose- oder Nanofiltrationsverfahren unter Verwendung einer modernen Anlage lassen sich Leitfähigkeiten von 3 bis 15 µS/cm erreichen.

Bei einem zweistufigen Verfahren, bei dem das aufzubereitende Wasser zweimal eine Membran durchdringt, lassen sich Leitfähigkeiten unterhalb von 5 µS/cm leicht, jedoch unterhalb von 2 µS/cm nur schwer erreichen. Die Leitfähigkeit des Permeats hängt dabei, wie vorstehend beschrieben, sehr stark vom Kohlendioxidgehalt des aufzubereitenden Wassers ab. Da gelöstes Kohlendioxid bei der Nanofiltration oder auch bei der Umkehrosmose praktisch nicht zurückgehalten werden kann, weist das Permeat aufgrund der Säureeigenschaften des $CO_2$ stets einen sauren pH-Wert und annähernd den $CO_2$-Gehalt des Rohwassers auf.

Es wurde bereits vorgeschlagen, das Kohlendioxid durch Zugabe von Lauge, zumeist Natronlauge, in das Hydrogenkarbonation zu überführen, welches dann von der Membran der Umkehrosmose- oder Nanofiltrationsanlage zurückgehalten wird.

Bei höheren Mengen von gelöstem Kohlendioxid werden größere Mengen an Natronlauge benötigt. Dieses Verfahren wird im Hinblick auf den Chemikalienverbrauch sowie den erforderlichen Umgang mit Lauge als nachteilig angesehen. Außerdem wird in manchen Fällen durch die zusätzliche Erhöhung des Salzgehalts die Erreichung einer Produktleitfähigkeit im Bereich von weniger als 2 µS/cm selbst durch ein zweistufiges Umkehrosmose- oder Nanofiltrationsverfahren schwierig. Eine weitere Schwierigkeit besteht darin, dass bei einem zweistufigen Verfahren die erste Stufe vorzugsweise je nach einer Vorbehandlung bei einem sauren pH-Wert gefahren werden sollte, um Scaling und Fouling zu verhindern. Infolgedessen wird die Laugenzugabe bei einem zweistufigen Verfahren vor der zweiten Stufe durchgeführt, wo die Probleme mit Scaling und Fouling im Allgemeinen geringer sind als in der ersten Stufe. Die Dosierung einer Lauge in verhältnismäßig geringfügig gepuffertes Wasser erweist sich aber als technisch schwierig und aufwendig. Bei einer zu geringen Dosierung kann das Kohlendioxid nicht in dem erwarteten Maße abgetrennt werden und eine zu hohe Leitfähigkeit des Permeats ist die Folge. Bei zu hoher Dosierung kann der Salzgehalt des Permeats derart erhöht werden, dass eine zu hohe Leitfähigkeit aufgrund des Restlaugengehalts resultiert. Mit diesem Verfahren hängt die zu erzielende Produktleitfähigkeit und die demgemäß zuzugebende Chemikalienmenge vom $CO_2$-Gehalt des Rohwassers ab, wobei bei hohem $CO_2$-Gehalt von beispielsweise mehr als 10 mg/l die Erzielung einer Produktleitfähigkeit von weniger als 2 µS/cm schwierig, wenn nicht sogar unmöglich ist.

Ein gattungsgemäßes Verfahren ist aus JP-A-05220480 bekannt. Die Membranentgasungstufe wird dabei ausschließlich durch Unterdruckbeaufschlagung betrieben. Letztes ist auch der Fall in JP-A-62273095, JP-A-07000962, WO 97/05945, JP-A-02052088, US-A-5,156,739. Die vorgenannten JP-A-07000962, WO 97/05945, JP-A-02052088, US-A-5,156,739 arbeiten nicht chemikalienfrei.

Hiervon ausgehend liegt der vorliegenden Erfindung die Aufgabe zugrunde, das Verfahren der eingangs genannten Art dahingehend zu verbessern, dass sich in technisch einfacher Weise eine Produktleitfähigkeit des aufbereiteten Wassers von weniger als 2, vorzugsweise von weniger als 1,5 µS/cm erreichen lässt, und zwar im Wesentlichen unabhängig vom $CO_2$-Gehalt des aufzubereitenden Rohwassers.

Diese Aufgabe wird durch ein Verfahren mit den Merkmalen des Anspruchs 1 gelöst.

Es wird also nach der Erfindung im Zusammenhang mit dem Umkehrosmose- oder Nanofiltrationsverfahren auf eine Chemikalienzugabe zur Überführung des Kohlendioxids in Hydrogenkarbonat verzichtet, und das $CO_2$ wird stattdessen durch eine Entgasungsstufe unter Verwendung einer für $CO_2$ permeablen Wand und einer $CO_2$-Partialdruckdifferenz unter Anwendung des erfindungsgemäßen Verfahrens entzogen.

Der Begriff "Reservoir" ist hierbei in allgemeinster Weise zu verstehen. Wenn das aufzubereitende Wasser in einem Rohr geführt wird, so kann das Reservoir von einem im Inneren des Rohrs gebildeten weiteren Rohr gebildet sein, das in Gleichstrom- oder Gegenstromrichtung mit Spülgas beaufschlagt ist und dessen Wände für $CO_2$ permeabel sind. Es wäre indessen auch möglich, dass das wasserführende Rohr durch einen mit Unterdruck oder Spülgas beaufschlagten Raum hindurchgeführt ist und der $CO_2$-Fluss durch die Rohrwände stattfindet. In jedem Falle erweist es sich als vorteilhaft, wenn die ebenfalls im weitesten Sinne zu verstehende permeable Wand eine größtmögliche Austauschfläche zur Verfügung stellt.

Vorrichtungen zum Abtrennen gelöster Gase, insbesondere von Sauerstoff, aus Wasser sind bekannt (beispielsweise "Ultra pure water", September 1996, Seiten 53 bis 56). Die erforderliche Stoffaustauschfläche wird durch mikroporöse hydrophobe Hohlfasern bereitgestellt, die für Wasser nicht durchdringbar sind. Aufgrund der Eigenschaft des $CO_2$ zu dissoziieren, wird die Abtrennung von $CO_2$ in dieser Druckschrift als weniger effektiv bezeichnet, so dass die Abtrennung von Sauerstoff im Vordergrund steht.

Bevorzugte Ausführungsformen des erfindungsgemäßen Verfahrens ergeben sich aus den Unteransprüchen.

Die Entziehung von $CO_2$ könnte bei Anwendung eines einstufigen Prozesses vor oder nach dieser Stufe durchgeführt werden. Es erweist sich indessen als vorteilhaft, wenn solchenfalls die Entziehung von $CO_2$ nach der ersten Stufe durchgeführt wird.

Bei zwei oder mehrstufigen Umkehrosmose- oder Nanofiltrationsprozessen wird die Entziehung von $CO_2$ vorzugsweise zwischen der ersten und der zweiten Stufe durchgeführt.

Bei einem zweistufigen Umkehrosmose- oder Nanofiltrationsverfahren wird die zweite Stufe in vorteilhafter Weise bei einem ph-Wert von 6 bis 8, insbesondere 7 bis 8, gefahren, da in diesem Bereich die meisten Membranen ein Rückhalteoptimum aufweisen.

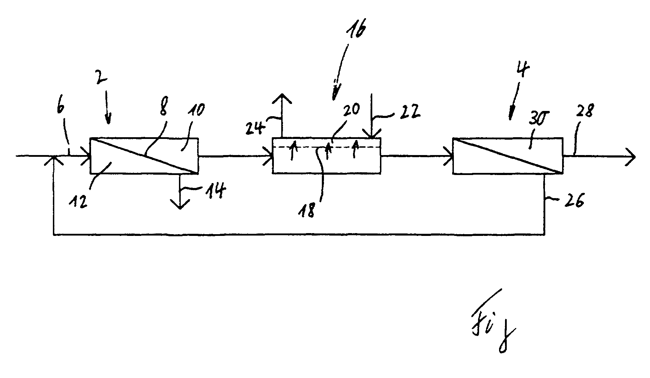

Weitere Merkmale, Vorteile und Einzelheiten der Erfindung ergeben sich aus der zeichnerischen Darstellung und nachfolgenden Beschreibung einer bevorzugten Ausführungsform der erfindungsgemäßen Vorrichtung und des erfindungsgemäßen Verfahrens. In der Zeichnung zeigt:

Die Figur      eine schematische Darstellung einer Umkehrosmoseeinrichtung.

Die Figur zeigt eine Umkehrosmoseeinrichtung mit einer ersten Stufe 2 und einer zweiten Stufe 4, die hintereinandergeschaltet sind, d. h. über einen Zulauf 6 wird Rohwasser der ersten Stufe 2 zugeführt. Das Wasser hat zuvor einen nicht dargestellten Vorfilter durchlaufen und steht unter einem ausreichenden Druck von heutzutage insbesondere 8 bis 18 bar, der aber zukünftig auch gesenkt werden könnte. In der ersten Osmosestufe 2 ist eine schematisch angedeutete Membran mit dem Bezugszeichen 8 bezeichnet. Sie trennt die Permeatseite 10 von der Konzentratseite 12 der ersten Osmosestufe 2. Die Membran 8 bewirkt eine Zurückhaltung der Ionen, die als stark angereichertes Konzentrat 14 verworfen werden. Die Permeatseite 10 führt zu einer zwischen der ersten und der zweiten Stufe 2 bzw. 4 angeordneten Entgasungsstufe 16. Das von der Permeatseite 10 der ersten Stufe 2 kommende Wasser wird entlang einer schematisch mit dem Bezugszeichen 18 angedeuteten hydrophoben Wand entlanggeleitet, die ein Reservoir 20 mit einem gegenüber dem Partialdruck des $CO_2$ des Wassers geringeren $CO_2$-Partialdruck aufweist. Die Wand 18 ist mikroporös und für gelöstes $CO_2$ durchlässig. Infolge des Partialdruckgefälles des $CO_2$ zwischen der Wasserseite der Membran und in dem Reservoir 20 permeiert gelöstes $CO_2$ durch die Wand 18 hindurch in das Reservoir 20. In das Reservoir 20 mündet ein Spülgasanschluss 22 sowie ein, insbesondere mit einer Unterdruck erzeugenden Vorrichtung verbindbarer Anschluss 24. Die Austrittseite der Entgasungsstufe 16 führt zur zweiten Umkehrosmosestufe 4, die entsprechend der ersten Stufe 2 aufgebaut ist. Das Konzentrat wird jedoch nicht wie bei der ersten Stufe 2 verworfen, sondern über eine Leitung 26 dem Zulauf 6 der ersten Stufe zugeführt. Am Ausgang 28 der Permeatseite 30 der zweiten Umkehrosmosestufe 4 steht höchsten Anforderungen genügendes Reinstwasser mit einer Leitfähigkeit von beispielsweise weniger als 1,3 µS/cm zur Verfügung.

Es wurde ein Vergleichsversuch durchgeführt, wobei Wasser der folgenden Zusammensetzung einem zweistufigen Umkehrosmoseverfahren unterworfen wurde. Einmal wurde in bekannter Weise NaOH zur $CO_2$-Reduzierung zugegeben und das andere Mal wurde die erfindungsgemäße Verfahrensführung angewandt. Zusammensetzung des verwandten enthärteten Stadtwassers:

Na 80 mg/l, Cl 7 mg/l, $SO_4$ 34 mg/l, $HCO_3$ 156 mg/l, $CO_2$ 10 mg/l, LF 230 µS/cm.

Nach der Aufbereitung des Wassers zeigte sich, dass durch die erfindungsgemäße Verfahrensführung eine Leitfähigkeit von unterhalb 1,3 µS/cm erreicht wurde, während durch die bekannte Zudosierung von Natronlauge die Leitfähigkeit nicht unter 2 µS/cm gesenkt werden konnte.

Bei der bekannten NaOH-Zudosierung vor der zweiten Stufe der Umkehrosmose wurde am Ausgang der zweiten Umkehrosmosestufe Wasser folgender Zusammensetzung erhalten:

Na 0,5 mg/l, CL < 0,1 mg/l, $SO_4$ < 0,1 mg/l, $HCO_3$ 1,3 mg/l, $CO_2$ < 0,1 mg/l, LF 2,0 µS/cm.

Die Anwendung des erfindungsgemäßen Verfahrens lieferte am Ausgang der zweiten Osmosestufe 4 Reinstwasser folgender Zusammensetzung:

Na < 0,1 mg/l, Cl < 0,1 mg/l, $SO_4$ < 0,1 mg/l, $HCO_3$ 0,1 mg/l, $CO_2$ 0,3 mg/l, LF 1,0 µS/cm.

## Patentansprüche

1. Verfahren zum Aufbereiten von Wasser, insbesondere zum Herstellen von Reinstwasser, durch Umkehrosmose oder Nanofiltration, wobei dem aufzubereitenden Wasser vor oder nach einer Osmosestufe oder Nanofiltration darin gelöstes $CO_2$ ohne Zugabe von Chemikalien entzogen wird, indem das Wasser entlang einer für $CO_2$ permeablen Wand (18) geführt wird, die ein Reservoir (20) mit einem gegenüber dem $CO_2$-Partialdruck des Wassers geringeren $CO_2$-Partialdruck begrenzt, **dadurch gekennzeichnet, dass** das Reservoir (20) mit Spülgas (22) beaufschlagt wird und dass als Spülgas Luft eingesetzt wird.

2. Verfahren nach Anspruch 1, **dadurch gekennzeichnet, dass** bei Anwendung eines einstufigen Umkehrosmose- oder Nanofiltrationsprozesses die Entziehung von $CO_2$ nach der ersten Stufe (2) durchgeführt wird.

3. Verfahren nach einem der Ansprüche 1, **dadurch gekennzeichnet, dass** bei Anwendung eines zweistufigen Umkehrosmose- oder Nanofiltrationsprozesses die Entziehung von $CO_2$ zwischen der ersten (2) und der zweiten Stufe (4) durchgeführt wird.

4. Verfahren nach einem der vorstehenden Ansprüche, **dadurch gekennzeichnet, dass** bei einem zweistufigen Umkehrosmose- oder Nanofiltrationsverfahren die zweite Stufe (4) bei einem PH-Wert von 6 - 8 durchgeführt wird.

## Claims

1. A method for treating water, specifically for manufacturing high-purity water, through reverse osmosis or nanofiltration, the $CO_2$ that is dissolved in the water to be treated being removed from the water either before or after an osmosis step or nanofiltration without the addition of chemicals, the water being conveyed along a $CO_2$-permeable wall (18), which forms the border of a reservoir (20) that has a $CO_2$-partial pressure that is less than the $CO_2$-partial pressure of the water, wherein the reservoir (20) is acted upon by a purge gas (22), and the purge gas used is air.

2. The method as recited in Claim 1, wherein, in a one-step reverse osmosis or nanofiltration process, $CO_2$ is removed after the first step (2).

3. The method as recited in any of Claims 1 [sic], wherein, in a two-step reverse osmosis or nanofiltration process, the $CO_2$ is removed between the first step (2) and the second step (4).

4. The method as recited in any of the preceding claims, wherein, in a two-step reverse osmosis or nanofiltration process, the second step (4) is carried out at a pH value of 6-8.

**Revendications**

1.  Procédé pour la préparation d'eau, notamment pour la préparation d'une eau des plus pures par osmose inverse ou nanofiltration, dans lequel on extrait de l'eau à préparer, avant ou après une étape d'osmose ou de nanofiltration, le $CO_2$ dissous sans ajouter de produit chimique, l'eau étant conduite le long d'une paroi perméable au $CO_2$ (18), qui limite un réservoir (20) présentant une pression partielle en $CO_2$ plus faible que la pression partielle en $CO_2$ de l'eau, **caractérisé en ce que** l'on alimente le réservoir (20) avec un gaz de balayage (22) et **en ce que** l'air est utilisé comme gaz de balayage.

2.  Procédé selon la revendication 1, **caractérisé en ce que**, lors de l'utilisation d'un procédé à une étape d'osmose inverse ou de nanofiltration, l'extraction du $CO_2$ est réalisée après la première étape (2).

3.  Procédé selon la revendication 1, **caractérisé en ce que** lors de l'utilisation d'un procédé à deux étapes d'osmose inverse ou de nanofiltration, l'extraction du $CO_2$ est réalisée entre la première étape (2) et la deuxième étape (4).

4.  Procédé selon l'une quelconque des revendications précédentes, **caractérisé en ce que** lors d'un procédé à deux étapes d'osmose inverse ou de nanofiltration, la deuxième étape (4) est réalisée pour une valeur de pH de 6 à 8.

*Fig*